# EUROPÄISCHE PATENTANMELDUNG

(11) **EP 2 591 931 A1**
(43) Veröffentlichungstag der Anmeldung: **15.05.2013**
(21) Anmeldenummer: 12188257.5
(22) Anmeldetag: 12.10.2012
(51) Int. Cl.: B60K 17/10, F16H 61/4043, F16H 61/444

(54) **Hydrostatischer Fahrantrieb und Fahrzeug mit einem derartigen Fahrantrieb**

(30) Priorität: 11.11.2011 DE 102011118255
(71) Anmelder: ROBERT BOSCH GMBH, 70442 Stuttgart (DE)
(72) Erfinder: Goettinger, Norbert, 71394 Kernen Im Remstal (DE); Essig, Heinz-Gerhard, 89173 Lonsee (DE)
(74) Vertreter: Thürer, Andreas

(57) **Zusammenfassung**

Offenbart ist ein hydrostatischer Antrieb mit einer Druckmittelquelle zum Antreiben von vier Hydromotoren, von denen jeweils zwei in parallel zueinander angeordneten Reihen geschaltet sind. Im Druckmittelströmungspfad zwischen den Hydromotoren einer Reihe ist jeweils ein Druckmittelvolumenstrom abgegriffen, der über eine jeweilige Ventileinrichtung zu einer Druckmittelsenke zur Umgehung des jeweiligen stromabwärtigen Hydromotors einer Reihe abführbar ist. Zum Druckausgleich bei Druckunterschieden zwischen den Druckmittelströmungspfaden, insbesondere bei einer Lenkbewegung einer Knicklenkung, ist ein Steuerventil vorgesehen, über das die Druckmittelströmungspfade miteinander hydraulisch verbindbar sind.

## Beschreibung

Die Erfindung betrifft einen hydrostatischen Fahrantrieb gemäß dem Oberbegriff des Patentanspruchs 1 und ein Fahrzeug mit einem derartigen hydrostatischen Fahrantrieb.

Derartige hydrostatische Fahrantriebe können allgemein bei Fahrzeugen, insbesondere jedoch bei landwirtschaftlichen Nutzfahrzeugen, wie Traktoren verwendet werden.

In der DE 10 2006 058 802 A1 ist ein hydrostatischer Fahrantrieb offenbart, bei dem mehrere Hydromotoren über eine gemeinsame Verstellpumpe mit Druckmittel versorgt sind. Im einfachsten Fall ist ein Hydromotor der Vorderachse und ein Hydromotor der Hinterachse zugeordnet, so dass bei Druckmittelversorgung beider Hydromotoren (Achsmotoren) Vor- und Hinterradachse angetrieben sind. Bei einem aufwendigeren Ausführungsbeispiel wird jedem Rad der Vorder- und Hinterachse jeweils ein Hydromotor (Radmotor) zugeordnet, von denen wiederum zwei in Reihe geschaltet sind, so dass bei einem Allradantrieb die linken bzw. die rechten Räder über zwei in Reihe geschaltete Hydromotoren angetrieben werden.

Im Druckmittelströmungspfad zwischen den beiden in Reihe geschalteten Hydromotoren ist ein Schaltventil angeordnet, das in eine Öffnungsstellung vorgespannt ist, in der eine Bypassleitung aufgesteuert ist, über die das Druckmittel vom Ablauf des stromaufwärtigen Hydromotors bei Umgehung des stromabwärtigen Hydromotors zur Niederdruckseite des Fahrantriebs zurückströmt, so dass entsprechend nur die dem stromaufwärtigen Hydromotor zugeordnete Achse angetrieben wird, während der stromabwärtige Hydromotor sozusagen leer mitläuft, da er vom Fahrzeug "mit genommen" wird. Zum Umschalten dieses Zweiradantriebs auf Vierradantrieb wird das Schaltventil in eine Sperrstellung gebracht, in der die Bypassleitung zum Niederdruck abgesperrt ist, so dass auch der zweite Hydromotor mit Druckmittel versorgt wird. Das Umschalten von Zweirad- auf Vierradantrieb erfolgt bei dieser Lösung willkürlich und ist von der Erfahrung eines Fahrers abhängig.

In der DE 196 48 706 C2 ist ein hydrostatischer Fahrantrieb mit zwei Hydromotoren offenbart, die jeweils einem Rad einer Fahrzeugachse zugeordnet sind. Bei diesem hydrostatischen Fahrantrieb ist eine Ventileinrichtung vorgesehen, über die die beiden Hydromotoren in Reihe oder parallel geschaltet werden können. Bei einer Parallelschaltung sind beide Hydromotoren praktisch mit der gleichen Druckdifferenz beaufschlagt, so dass sich bei einer Kurvenfahrt ein interner Ausgleich der Durchflussmengen der beiden Hydromotoren ergibt. Bei einer Reihenschaltung kann es bei Kurvenfahrt durch die unterschiedlichen Drehzahlen zu Kavitationen kommen, allerdings ist in Reihenschaltung ein synchroner Lauf beider Hydromotoren eher gewährleistet.

Weiterhin ist aus dem Stand der Technik bekannt, dass die vorstehend erläuterten Fahrantriebe eine Knicklenkung aufweisen. Bei dieser sind zwei Achsen eines Fahrzeugs mit einem Gelenk verbunden und relativ zueinander, beispielsweise über Hydraulikzylinder, verschwenkbar. Einer jeweiligen Achse sind hierbei zwei Räder zugeordnet, die jeweils von einem Hydromotor antreibbar sind. Hydraulisch kann der Fahrantrieb hierbei insbesondere entsprechend der DE 10 2006 058 802 A1 ausgestaltet sein. Bei einer Lenkbewegung der Knicklenkung, das heißt bei einem Verschwenken der Achsen relativ zueinander, werden zwei Räder einer Seite des die Knicklenkung aufweisenden Fahrzeugs aufeinander zu bewegt, während zwei Räder der anderen Seite voneinander wegbewegt werden. Die Räder einer jeweiligen Seite und somit die Hydromotoren einer jeweiligen Reihe werden durch die Lenkbewegung mit gegensinnigen Drehmomenten beaufschlagt. Durch die gegensinnigen Drehmomente steigt der Druck im Druckmittelströmungspfad zwischen den in Reihe angeordneten Hydromotoren, die den sich aufeinander zu bewegenden Rädern zugeordnet sind, an, während der Druck im Druckmittelströmungspfad zwischen den Hydromotoren der anderen Reihe abfällt. Dieser Druckunterschied bei einer Lenkbewegung führt insbesondere im Fahrzustand eines den hydrostatischen Fahrantriebs aufweisenden Fahrzeugs nachteilig zu unterschiedlichen Traktionen der Räder.

Demgegenüber liegt der Erfindung die Aufgabe zugrunde, einen hydrostatischen Fahrantrieb und ein Fahrzeug mit einem derartigen Fahrantrieb zu schaffen, die die genannten Nachteile beseitigen.

Diese Aufgabe wird durch einen hydrostatischen Fahrantrieb mit den Merkmalen des Patentanspruches 1 und durch ein Fahrzeug mit den Merkmalen des Patentanspruches 10 gelöst.

Sonstige vorteilhafte Weiterbildungen der Erfindung sind Gegenstand weiterer Unteransprüche.

Erfindungsgemäß hat ein hydrostatischer Fahrantrieb eine, insbesondere verschwenkbare, Hydropumpe zum Antreiben von vier Hydromotoren. Von diesen sind jeweils zwei in Reihe geschaltet. Vorteilhafter Weise sind die jeweiligen Druckmittelströmungspfade zwischen zwei in Reihe angeordnete Hydromotoren über ein Steuerventil verbindbar, wodurch somit ein Druckmittelverbindung zwischen den Druckmittelströmungspfaden steuerbar ist.

Diese Lösung hat den Vorteil, dass Druckunterschiede zwischen den Druckmittelströmungspfaden zwischen jeweils zwei in Reihe angeordneten Hydromotoren, insbesondere aufgrund einer Lenkbewegung von durch die Hydromotoren angetriebenen Rädern, dadurch ausgeglichen werden können, dass das Steuerventil eine Druckmittelverbindung zwischen den Druckmittelströmungspfaden, insbesondere während der Lenkbewegung, aufsteuert. Hierdurch werden Druckunterschiede zwischen den Druckmittelströmungspfaden auf einfache Weise ausgeglichen. Traktionsunterschiede aufgrund einer Lenkbewegung von durch die Hydromotoren angetriebenen Rädern werden somit vermieden.

Von dem jeweiligen Druckmittelströmungspfad zwischen jeweils zwei in Reihe angeordneten Hydromotoren ist vorzugsweise ein Druckmittelvolumenstrom über eine Ventileinrichtung zu einer Druckmittelsenke abführbar, um den jeweiligen stromabwärtigen Hydromotor zu umgehen. Die jeweilige Ventileinrichtung ist vorzugsweise derart ausgelegt, dass sie den Druckmittelvolumenstrom auf einen Maximalwert begrenzt, der einem zugelassenen Schlupf am zugeordneten Hydromotor entspricht.

Durch die Ventileinrichtung kann ein Druckmittelstrom eines jeweiligen Druckmittelströmungspfads zur Niederdruckseite auf eine vorbestimmte Menge begrenzt werden. Diese Menge entspricht dann einem zugelassenen Schlupf am stromaufwärtigen Hydromotor. Wird dieser zugelassenen Schlupf überschritten, so baut sich im Druckmittelströmungspfad zwischen den beiden Hydromotoren ein Druck auf, da über die Ventileinrichtung nicht mehr Druckmittel zur Niederdruckseite abströmen kann. Der stromabwärtige Hydromotor wird dann bei Überschreiten dieses zugelassenen Schlupfes mit Druckmittel versorgt, so dass der Vortrieb über die diesem Hydromotor zugeordnete Achse unterstützt wird. Sobald der Schlupf am stromaufwärtigen Hydromotor den Grenzwert unterschreitet wird der stromabwärtige Hydromotor wieder selbst tätig "weggeschaltet". Somit ist ein Umschalten zwischen einem Zweiradantrieb und einem Vierradantrieb ohne fehlerbehafteten willkürlichen Eingriff einer Bedienperson ermöglicht, wodurch die Betriebssicherheit des Fahrzeugs erheblich verbessert ist und die Zuschaltung des stromabwärtigen Hydromotors nur bei Bedarf erfolgt. Eine gewillte Steuerung der Ventileinrichtung durch einen Fahrer ist vorteilhafterweise nicht erforderlich. Durch den Ausgleich von Druckunterschieden zwischen den Druckmittelströmungspfaden durch das Steuerventil arbeiten ferner, insbesondere bei der Lenkbewegung, die Ventileinrichtungen mit einem gleichen Druck.

Da das Steuerventil vorzugsweise zum Druckausgleich bei einer Lenkbewegung eingesetzt ist, wird dieses in Abhängigkeit der Lenkbewegung von zumindest zwei auf einer gemeinsamen Achse angeordneter Räder gesteuert, wobei ein jeweiliger Hydromotor ein Rad des Fahrantriebs antreibt. Das Steuerventil hängt somit von der Lenkbewegung und nicht von einem Eingriff eines Fahrers ab. Hierdurch ist eine gewillte Steuerung des Fahrers bei dem Steuerventil nicht erforderlich.

Mit Vorteil wird der hydrostatische Fahrantrieb bei einer Knicklenkung eingesetzt und das Steuerventil dann in Abhängigkeit einer Lenkbewegung der Knicklenkung gesteuert. Bei einer herkömmlichen Knicklenkung sind zumindest zwei Achsen mit jeweils zwei Rädern über hydraulische Lenkzylinder relativ zueinander verschwenkbar.

Mit Vorteil handelt es sich bei dem Steuerventil um ein Wegeventil, insbesondere um ein Proportionalwegeventil, dessen Ventilschieber in Richtung seiner Schließstellung von einer Federkraft einer Ventilfeder in Richtung seiner Öffnungsstellung vom Lastdruck einer hydraulischen Lenkung oder in seine Öffnungsstellung durch einen elektrischen, insbesondere magnetischen, Aktuator bringbar ist. Durch die Beaufschlagung des Ventilschiebers durch den Lastdruck wird dieser bei einer Lenkbewegung der hydraulischen Lenkung ohne Eingreifen eines Fahrers mit Lastdruck beaufschlagt. Wird der Ventilschieber des Steuerventils durch den elektrischen Aktuator betätigt, so kann dieser beispielsweise in Abhängigkeit von einer über eine Sensorik gemessene Lenkbewegung ebenfalls unabhängig von einem Eingreifen des Fahrers gesteuert werden.

Vorzugsweise ist die Federkraft der Ventilfeder einstellbar, womit der zum Verschieben des Ventilschiebers in Richtung seiner Öffnungsstellung notwendige Lastdruck einstellbar ist. Das Steuerventil kann somit für unterschiedliche Fahrzeugtypen unterschiedlich eingestellt werden. Beispielsweise wird die Federkraft derart gewählt wird, dass der Ventilschieber ab einem Lastdruck von etwa 50 bar in Richtung seiner Öffnungsstellung bewegt wird.

Beim Einsatz eines über einen Lastdruck steuerbaren Steuerventils ist vorzugsweise in weiterer Ausgestaltung der Erfindung ein Wechselventil vorgesehen, dass eingangsseitig mit zwei Lenkzylindern der Knicklenkung zum Abgreifen des höchsten Lastdrucks verbunden ist. Ausgangsseitig des Wechselventils ist dann eine mit dem Steuerventil verbundene Steuerleitung angeschlossen, um den Ventilschieber des Steuerventils mit dem höchsten Lastdruck in Richtung seiner Öffnungsstellung zu beaufschlagen.

Bevorzugter Weise ist eine Electronic Control Unit (ECU) zum Auswerten einer erfassten Lenkbewegung und zum Ansteuern des Steuerventils, insbesondere des elektrischen Aktuators, in Abhängigkeit der Lenkbewegung vorgesehen.

Erfindungsgemäß hat ein Fahrzeug einen erfindungsgemäßen hydrostatischen Fahrantrieb, wodurch Räder des Fahrzeugs im Wesentlichen keine unterschiedliche Traktion aufgrund einer Lenkbewegung, insbesondere bei einer Lenkbewegung einer Knicklenkung, aufweisen.

Bevorzugte Ausführungsbeispiele der Erfindung werden im Folgenden anhand schematischer Zeichnungen näher erläutert. Es zeigen:
Figur 1 einen Schaltplan eines erfindungsgemäßen hydrostatischen Fahrantriebs und
Figur 2 eine vergrößerte Darstellung eines Ausschnitts des Schaltplans aus Figur 1.

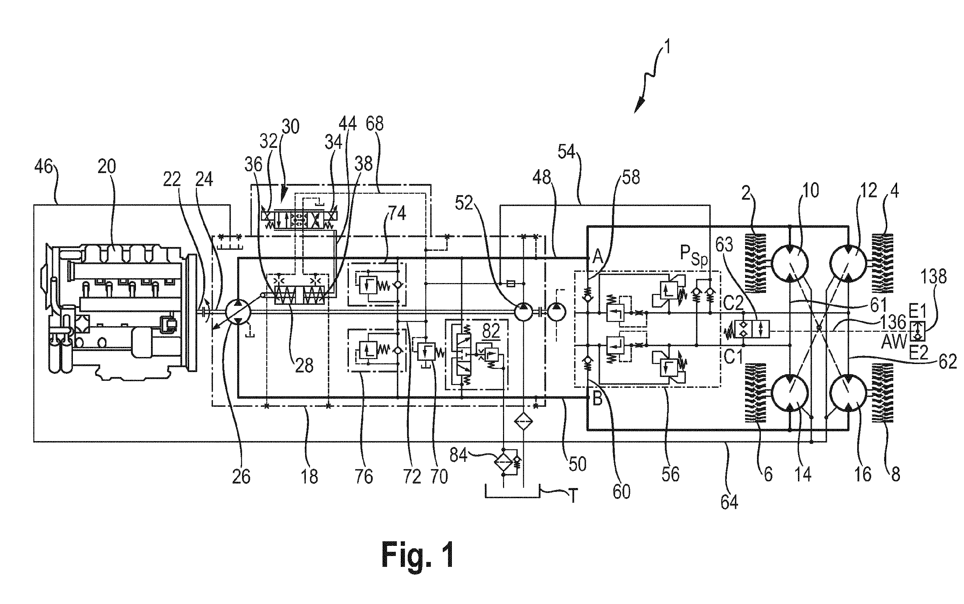

Ein hydrostatischer Fahrantrieb 1 gemäß Figur 1 wird bei einem landwirtschaftlichen Nutzfahrzeug, beispielsweise bei einem Ackerschlepper, eingesetzt. Dieser ist mit einem Allradantrieb ausgeführt, der je nach Betriebsbedingungen im Zweiradantriebs- oder Vierradantriebsmodus betreibbar ist. Bei dem dargestellten Ausführungsbeispiel sind den Rädern 2, 4 der Vorderachse und den Rädern 6, 8 der Hinterachse jeweils ein Radmotor zugeordnet, die im Folgenden als Hydromotoren 10, 12 (bspw. Hinterachse) bzw. 14, 16 (bspw. Vorderachse) bezeichnet sind. Dabei sind jeweils zwei Hydromotoren 10, 14; 12, 16 jeder Achse in Reihe geschaltet, während die Hydromotoren einer Achse 10, 12; 14, 16 parallel geschaltet sind. Die Druckmittelversorgung der Hydromotoren 10, 12, 14, 16 erfolgt über eine Verstellpumpeneinheit 18, die durch den Motor des Ackerschleppers, im vorliegenden Fall einen Verbrennungsmotor 20, angetrieben ist. Eine Ausgangswelle des Verbrennungsmotors 20 ist über eine Kupplung 22 mit einer Antriebswelle 24 der Verstellpumpeneinheit 18 verbunden. Der Aufbau einer derartigen Verstellpumpeneinheit 18 ist aus dem Stand der Technik, beispielsweise aus dem Buch "Ölhydraulik", G. Bauer, 7. Auflage; B.G. Teubner Stuttgart 1998, Figuren 71, 72 bekannt, so dass hier nur die zum Verständnis der Erfindung erheblichen Bauelemente erläutert werden.

Eine derartige Verstellpumpeneinheit 18 hat eine über Null verschwenkbare Verstellpumpe 26, die beispielsweise als Axialkolbenpumpe ausgeführt sein kann, deren Schwenkwinkel über einen Stellzylinder 28 verstellbar ist. Dessen Einstellung erfolgt über ein elektrisch verstellbares, bspw. als Servoventil ausgeführtes Pumpenregelventil 30, das über zwei Proportionalmagneten 32, 34 aus einer Neutralposition heraus in eine Regelposition verstellbar ist, in der in zwei Steuerräume 36, 38 des Stellzylinders 28 eine Steuerdruckdifferenz einsteuerbar ist, über die der Kolben des Stellzylinders 28 aus- oder eingefahren wird, wobei diese Kolbenbewegung jeweils gegen die Kraft einer von zwei Rückführfedern 40, 42 erfolgt. Die Lage des Kolbens des Stellzylinders 28 wird über ein Rückführgestänge 44 zurück zum Pumpenregelventil 30 gemeldet. Die Stellbewegung des Stellzylinders 28 endet, wenn das auf das Rückführgestänge 44 wirkende Moment im Gleichgewicht mit dem durch den Steuerstrom für die Proportionalmagneten 32, 34 hervorgerufenen magnetischen Moment steht; das Regelventil 30 befindet sich dann wieder etwa in seiner Mittellage. Dadurch ist gewährleistet, dass jedem Steuerstrom (Ansteuerung der Proportionalmagneten 32, 34) eine Auslenkung des Stellzylinders 28 und damit ein Pumpenförderstrom zugeordnet ist. Weitere Einzelheiten dieser elektrohydraulischen Pumpenregelung sind dem eingangs genannten Stand der Technik zu entnehmen.

In der Verstellpumpeneinheit 18 entstehende Leckage wird über eine Leckageleitung 46 zu einem Tank T zurückgeführt.

Die über Null verschwenkbare Verstellpumpe 26 ist über zwei Leitungen mit der Hydromotorenanordnung 10, 12, 14, 16 verbunden, wobei im Folgenden angenommen sei, dass die Verstellpumpe 26 so eingestellt ist, dass das Druckmittel in eine in Figur 1 oben liegende Zulaufleitung 48 gefördert wird, die somit die Hochdruckleitung bildet, während das Druckmittel von den Hydromotoren über eine Ablaufleitung 50 (Niederdruckseite) zum Sauganschluss der Verstellpumpe 26 zurück strömt. Bei einem Verschwenken der Verstellpumpe 26 über Null wird die Druckmittelströmungsrichtung umgedreht, so dass die mit dem Bezugszeichen 50 versehene Leitung dann die Zulaufleitung und die mit dem Bezugszeichen 48 versehene Leitung die Ablaufleitung bildet.

Der Fahrantrieb 1 ist somit als geschlossener Kreislauf ausgeführt, wobei eventuelle Leckageverluste aus dem Tank T ausgeglichen werden können. Hierzu ist eine Speisepumpe 52 vorgesehen, die ebenfalls über die Antriebswelle 24 angetrieben ist. Über diese Speisepumpe 52 wird Druckmittel aus dem Tank T angesaugt und über eine Speiseleitung 54 in den Druckmittelströmungspfad zwischen die in Reihe geschalteten Hydromotoren 10, 14; 12, 16 eingespeist. Dazu ist die Speiseleitung 54 an einen Anschluss Pₛₚ einer Ventileinrichtung 56 angeschlossen, die später noch näher erläutert wird. Von der Zulaufleitung 48 und der Ablaufleitung 50 zweigen jeweils Leitungsabschnitte 58, 60 ab, die zu Anschlüssen A, B der Ventileinrichtung 56 führen. Ein jeweiliger Leitungsabschnitt 61 und 62 zwischen den jeweils in Reihe angeordneten Hydromotoren 10, 14 beziehungsweise 12, 16 ist an einen Anschluss C1 beziehungsweise C2 der Ventileinrichtung 56 angeschlossen. Die Leitungsabschnitte 61 und 62 sind über das erfindungsgemäße Steuerventil 63 miteinander verbindbar.

Eventuelle Leckagen der Hydromotoren 10 bis 16 werden über interne Leckageleitungen 64 zum Tank T abgeleitet.

Wie in Figur 1 angedeutet, können zusätzlich zur Speisepumpe 52 noch weitere Speisepumpen zur Druckmittelversorgung weiterer Verbraucher oder zum Ausgleich von Leckagen vorgesehen sein. Über die Speisepumpe 52 wird in an sich bekannter Weise auch das Steueröl zum Verstellen des Stellzylinders 28 bereit gestellt. Hierzu zweigt von der Speiseleitung 54 eine Steuerleitung 68 ab, die zum Eingang des Pumpenregelventils 30 geführt ist. Der Druck in der Speiseleitung 54 ist über ein Druckbegrenzungsventil 70 begrenzt. Von der Speiseleitung 54 zweigt des Weiteren ein Speisekanal 72 ab, der zu den Leitungen 48, 50 verzweigt, wobei in jeder dieser Zweigleitungen eine Druckbegrenzungseinheit 74, 76 vorgesehen ist, die jeweils aus einem zur jeweiligen Leitung 48 bzw. 50 hin öffnenden Rückschlagventil und einem den Druck in der jeweiligen Leitung 48, 50 begrenzenden Druckbegrenzungsventil besteht, das in einer das jeweils zugeordnete Rückschlagventil umgehenden Umgehungsleitung angeordnet ist. Zum Ausgleich einer Leckage kann somit über die Speisepumpe 52, einen Teil der Speiseleitung 54, den davon abzweigenden Speisekanal 72 und den zur jeweiligen Niederdruckseite abzweigenden Zweig und das darin angeordnete Rückschlagventil Druckmittel in die Niederdruckseite eingespeist werden.

Der Grundaufbau eines derartigen Fahrantriebs ist aus dem eingangs genannten Stand der Technik, beispielsweise der DE 10 2006 058 802 A1 bekannt, so dass unter Verweis auf diese Anmeldung auf weitere Erläuterungen zum pumpenseitigen Teil des Fahrantriebs 1 erforderlich sind.

In Figur 1 ist noch eine Spülventileinheit 82 vorgesehen, über das Druckmittel aus dem jeweiligen Niederdruckzweig abgezweigt und über einen Filter 84 und ggf. einen Kühler zum Tank T abströmen und somit regeneriert werden kann. Das entnommene Druckmittel wird über die Speisepumpe 52 auf dem oben beschriebenen Weg ausgeglichen.

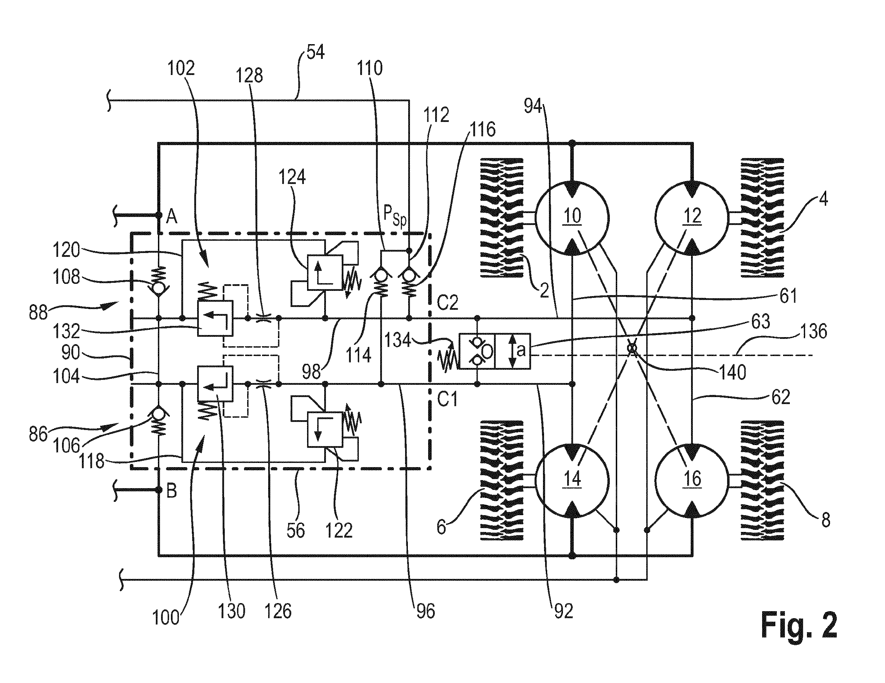

Anhand Figur 2 wird nunmehr die Ventileinrichtung 56 näher erläutert.

Gemäß Figur 2 ist die Ventileinrichtung 56 zweiteilig mit einem dem Leitungsabschnitt 61 zwischen den Hydromotoren 10 und 14 zugeordneten in der Figur 2 unteren Ventileinheit 86 und einer dem Leitungsabschnitt 62 zwischen den Hydromotoren 12 und 16 zugeordneten oberen Ventileinheit 80 ausgebildet. Die Ventileinheiten 86 und 88 sind in einem Ventilblock 90 zusammengefasst, bei dem es sich um einen sogenannten High Efficient Traction (HET) Block handelt. Dieser weist die Anschlüsse C1 und C2 auf, an die ein jeweiliger Leitungsabschnitt 61 und 62 über eine Zweigleitung 92 beziehungsweise 94 angeschlossen ist. Ein jeweiliger Anschluss C1 und C2 ist mit einem Bypassleitungsabschnitt 96 beziehungsweise 98 der Ventileinheit 86 beziehungsweise 88 verbunden. In diesem ist jeweils ein Mengenbegrenzungsventil 100 beziehungsweise 102 angeordnet. Die Bypassleitungsabschnitt 96 und 98 münden stromabwärts ihrer Mengenbegrenzungsventile 100 beziehungsweise 102 in einer gemeinsamen Verzweigungsleitung 104, die mit den Anschlüssen A und B der Ventileinrichtung 56 verbunden ist. Stromabwärts der Mündung der Bypassleitungsabschnitte 96 und 98 in der Verzweigungsleitung 104 ist jeweils ein in Druckmittelströmungsrichtung hin zum Anschluss B beziehungsweise A sich öffnendes Rückschlagventil 106 beziehungsweise 108 angeordnet, das jeweils bei einem relativ hohen Druck, beispielsweise bei 14 bar öffnet und somit einen Druckmittelströmungspfad zum jeweiligen niederdruckseitigen Anschluss B oder A freigibt. Das jeweils andere Rückschlagventil wird durch den höheren Druck im Hochdruckzweig zugehalten.

Die Speiseleitung 54 verzweigt sich stromabwärts des Anschluss P_{Sp} in zwei Speiseleitungsabschnitte 110 beziehungsweise 112. Ein jeweiliger Speiseleitungsabschnitt 110 beziehungsweise 112 ist über ein Speiserückschlagventil 114 beziehungsweise 116 mit dem Bypassleitungsabschnitt 96 beziehungsweise 98 stromaufwärts des Mengenbegrenzungsventils 100 beziehungsweise 102 verbunden. Die Speiserückschlagventile 114 beziehungsweise 116 öffnen in einer Druckmittelströmungsrichtung hin zum Bypassleitungsabschnitt 96 beziehungsweise 98 bei einem vergleichsweise geringem Druck von etwa 1 bar, sodass Druckmittel über die Speisepumpe 52 aus Figur 1, die Speiseleitung 54 und die Speisungsleitungsabschnitte 110 beziehungsweise 112 sowie das sich öffnende Rückschlagventil 114 beziehungsweise 116 in den Bypassleitungsabschnitt 96 beziehungsweise 98 gespeist werden kann, sodass der Speisepumpendruck auch im Druckmittelströmungspfad 92 beziehungsweise 94 und somit im Bereich zwischen den beiden in Reihe geschalteten Hydromotoren 10, 14 beziehungsweise 12, 16 anliegt. Auf diese Weise ist gewährleistet, dass am jeweiligen Zulauf der stromabwärts gelegenen Hydromotoren, das heißt im vorliegenden Fall der Hydromotoren 14, 16, zumindest der Speisepumpendruck anliegen kann. Stromabwärts der Einmündung der Speiseleitung 110 beziehungsweise 112 in den Bypassleitungsabschnitt 96 beziehungsweise 98 und stromaufwärts des Mengenbegrenzungsventils 100 beziehungsweise 102 zweigt von einem jeweiligen Bypassleitungsabschnitt 96 beziehungsweise 98 ein Bypassleitung 118 beziehungsweise 120 ab. In dieser ist jeweils ein Bypassventil 122 beziehungsweise 124 angeordnet, das jeweils einen über eine Federkraft einer Ventilfeder in eine Schließstellung vorgespannten Ventilschieber aufweist. In gleicher Richtung wirkt auch ein Druck stromabwärts des jeweiligen Mengenbegrenzungsventils 100 beziehungsweise 102. In Öffnungsrichtung wirkt ein Druck stromaufwärts des Mengenbegrenzungsventils 100 beziehungsweise 102 auf den Ventilschieber des jeweiligen Bypassventils 118 beziehungsweise 120. Demzufolge öffnet ein jeweiliges Bypassventil 118 beziehungsweise 120, wenn eine Druckdifferenz über dem Mengenbegrenzungsventil 100 beziehungsweise 102 gleich dem Druckäquivalent der dem Bypassventil 122 beziehungsweise 124 zugeordneten Ventilfeder ist. In diesem Fall kann dann Druckmittel über die Speisepumpe 52 aus Figur 1 am Mengenbegrenzungsventil 100 beziehungsweise 102 vorbei in die Verzweigungsleitung 104 strömen.

Das Mengenbegrenzungsventil 100 beziehungsweise 102 ist jeweils als Stromregelventil ausgeführt, das den maximalen Volumenstrom einer jeweiligen Reihe von Hydromotoren 10, 14 beziehungsweise 12, 16 zur Niederdruckseite begrenzt. Das jeweilige Stromregelventil 100 beziehungsweise 102 ist durch eine Messblende 126 beziehungsweise 128 und eine stromabwärts davon angeordnete Druckwaage 130 beziehungsweise 132 gebildet, deren Ventilschieber in Öffnungsrichtung von der Kraft einer Druckwaagenfeder und dem Druck stromabwärts der Messblende 126 beziehungsweise 128 und in Schließrichtung vom Druck stromaufwärts der Messblende 126 beziehungsweise 128 beaufschlagt ist. Über eine jeweilige Druckwaage 130 beziehungsweise 132 wird somit der Druckmittelvolumenstrom über die Messblende 126 beziehungsweise 128 begrenzt. Das heißt, je nach Einstellung dieses Mengenbegrenzungsventil 100 beziehungsweise 102 strömt über den Druckmittelströmungspfad 92 beziehungsweise 94 vom Ablauf der stromaufwärts gelegenen Hydromotoren 10, 12 Druckmittel zum Niederdruck ab, sodass sich im Zulauf zu den stromabwärts gelegenen Hydromotoren 14, 16 kein Druck aufbauen kann. Demzufolge werden bei einem griffigen Untergrund (kein Schlupf) die beiden stromaufwärts gelegenen Hydromotoren 10, 12 und die entsprechenden Räder 2, 4, siehe Figur 1, angetrieben, während die beiden stromabwärtigen Hydromotoren 14, 16 lediglich über das Fahrzeug "mitgenommen werden" und somit leer laufen. Die Drehzahl der Hydromotoren 10 bis 16 ist jedoch gleich. Der maximal zulässige Druckmittelvolumenstrom durch das Mengenbegrenzungsventil 100 beziehungsweise 102 ist so ausgelegt, dass sich bei einem gewissen Schlupf an den Rädern 2, 4, siehe Figur 1, und den entsprechenden Hydromotoren 10, 12 durch die daraus resultierende Erhöhung der Drehzahl der Hydromotoren 10, 12 im Zulauf zu den beiden anderen Hydromotoren 14, 16 ein Druck aufbaut, sodass diese dann zugeschaltet werden und das Fahrzeug mit Allradantrieb fährt. Das heißt durch entsprechende Auslegung des Mengenbegrenzungsventils 100 beziehungsweise 102 kann der zulässige Schlupf an dem jeweiligen stromaufwärts gelegenen Hydromotor 10, 12 bestimmt werden. Bei Überschreiten dieses Schlupfes der Räder 2 beziehungsweise 4 wird dann der jeweilige stromabwärts gelegene Hydromotor 14 beziehungsweise 16 zugeschaltet. Ein Eingriff einer Bedienperson ist nicht erforderlich, sodass eine Fahrsicherheit und ein Bedienkomfort ganz wesentlich verbessert sind.

Die vorbeschriebene Umschaltung von Zweiradantrieb zu Vierradantrieb erfolgt selbstverständlich auch bei Verschwenken der Verstellpumpe 26 über Null und der entsprechenden Fahrtrichtungsumkehr.

Prinzipiell kann man das Mengenbegrenzungsventil 100 beziehungsweise 102 auch verstellbar ausführen, sodass der zulässige Schlupf je nach Betriebsbedingungen oder Fahrtrichtung veränderbar ist.

Das Steuerventil 63 in Figur 2 ist zwischen den Zweigleitungen 92 und 94 stromaufwärts der Ventileinheit 86 beziehungsweise 88 angeordnet. Bei dem Steuerventil 63 handelt es sich um ein 2/2-Wegeventil mit einer Schließstellung 0 und einer Öffnungsstellung a. Ein Ventilschieber des Steuerventils 63 ist über eine Ventilfeder 134 in der Schließstellung 0 vorgespannt, in der eine Druckmittelverbindung zwischen den Zweigleitungen 92 und 94 zugesteuert ist. Über eine Steuerleitung 136 ist der Ventilschieber des Steuerventils 63 in Richtung einer Öffnungsstellung a durch einen Lastdruck einer nicht dargestellten hydraulischen Lenkung entgegen der Federkraft der Ventilfeder 134 beaufschlagbar. In der Öffnungsstellung a stehen die Zweigleitungen 92 und 94 in Druckmittelverbindung.

Die Steuerleitung 136 ist gemäß Figur 1 mit einem Ausgang AW eines Wechselventils 138 verbunden. Dieses hat zwei Eingänge E1 und E2, die jeweils mit einem nicht dargestellten Lenkzylinder einer Knicklenkung eines den Fahrantrieb aufweisenden Fahrzeugs verbunden sind. Durch das Wechselventil 138 wird dann der den höchsten Lastdruck aufweisende Lenkzylinder mit der Steuerleitung 136 verbunden, womit der höchste Lastdruck dann auf den Ventilschieber des Steuerventils 63 aus Figur 2 beaufschlagt ist. Das Steuerventil 63 wird somit bei einer Lenkbewegung, das heißt bei einer Ansteuerung der nicht dargestellten Lenkzylinder mit einem Lastdruck beaufschlagt. Die die Lenkzylinder aufweisende Knicklenkung ist hinlänglich aus dem Stand der Technik bekannt, weswegen für weitergehende Informationen auf diesen verwiesen wird.

Eine Schwenkachse 140 der Knicklenkung ist in Figur 2 dargestellt, die etwa im Schnittpunkt zweier die Hydromotoren 10, 16 beziehungsweise 12, 14 verbindenden Diagonalen liegt. Durch die Knicklenkung sind Hinterachse mit den Rädern 2 und 4 und die Vorderachse mit den Rädern 6 und 8 relativ zueinander um die Schwenkachse 140 verschwenkbar. Werden durch die Knicklenkung die beiden Achsen beispielsweise nach links verschwenkt, so bewegen sich die Räder 2 und 6 der einen Seite aufeinander zu, während die Räder 4 und 8 der anderen Seite voneinander weg bewegt werden. Da die Räder 2 und 6 beziehungsweise 4 und 8 auf einer Oberfläche abrollen, erfahren diese jeweils ein gegensinniges Drehmoment. Diese gegensinnigen Drehmomente der Räder 2 und 6 beziehungsweise 4 und 8 werden auf ihre ihnen zugeordneten Hydromotoren 10 und 14 beziehungsweise 12 und 16 übertragen, was in dem Leitungsabschnitt 61 zwischen den Hydromotoren 10 und 14 zu einer Druckerhöhung und im Leitungsabschnitt 62 zwischen den Hydromotoren 12 und 16 zu einer Drucksenkung führt. Die unterschiedlichen Drücke in den Leitungsabschnitten 61 und 62 würden wiederum zu einem ungleichen Antriebsverhalten der Hydromotoren 10 bis 16 führen, wobei dann die ihnen zugeordneten Räder 2 bis 8 jeweils eine unterschiedliche Traktion aufweisen würden. Durch das erfindungsgemäße Steuerventil 63 kann der durch die Lenkbewegung entstehende Druckunterschied zwischen den Leitungsabschnitten 61 und 62 ausgeglichen werden. Bei einer Lenkbewegung der nicht dargestellten Knicklenkung um die Schwenkachse 140 wirkt auf die Lenkzylinder ein Lastdruck, wobei der höchste Lastdruck vom Wechselventil 138 aus Figur 1 abgegriffen ist und auf dem Ventilschieber des Steuerventils 63 in Richtung seiner Öffnungsstellung beaufschlagt wird. Überschreitet die Druckkraft des Lastdrucks die Federkraft der Ventilfeder 134 des Steuerventils 63, so wird der Ventilschieber in seine Öffnungsstellung a bewegt, in der die Zweigleitungen 92 und 94 und über diese die Leitungsabschnitte 61 und 62 miteinander verbunden sind und der Druckunterschied zwischen den Leitungsabschnitten 61 und 62 ausgeglichen wird. Nach Beenden der Lenkbewegung fällt der Lastdruck, wodurch der Ventilschieber des Steuerventils 63 wieder durch die Federkraft der Ventilfeder 134 in seine Schließstellung 0 bewegt wird, wodurch eine Druckmittelverbindung zwischen den Leitungsabschnitten 61 und 62 wieder getrennt wird. Das Steuerventil 63 wird somit automatisch bei einer Lenkbewegung in die Öffnungsstellung a geschaltet. Durch Einstellen der Federkraft der Ventilfeder 134 kann der notwendige Lastdruck, der zum Verschieben des Ventilschiebers des Steuerventils 63 in seine Öffnungsstellung notwendig ist, eingestellt werden. Die Ventilfeder 134 ist dabei beispielsweise derart eingestellt, dass der notwendige Lastdruck zumindest etwa 50 bar beträgt. Durch den Druckausgleich der Leitungsabschnitte 61 und 62 während der Lenkbewegung werden die Ventileinrichtungen 86 und 88 vorteilhafterweise mit einem gleichen Druck versorgt, was zu gleichen Bedingungen der Schlupfregelung der beiden Reihen mit den Hydromotoren 10, 14 und 12, 16 führt.

Alternativ kann vorgesehen sein, das Steuerventil 63 elektrisch zu betätigen. Hierzu wird der Ventilschieber über einen elektromagnetischen Aktuator entgegen der Federkraft der Ventilfeder 134 in Richtung seiner Öffnungsstellung bewegt. Der Aktuator wird hierbei von eine Electronic Control Unit (ECU) gesteuert, die einen Lenkeinschlag der Knicklenkung, insbesondere über eine Sensorik, erfasst und auswertet und dann entsprechend den Aktuator des Steuerventils 63 ansteuert, um durch die Lenkbewegung auftretende Druckunterschiede zwischen den Leitungsabschnitten 61 und 62 auszugleichen.

Es ist denkbar, dass das Steuerventil 63 als Proportionalventil ausgebildet ist.

Das Steuerventil 63 kann beispielsweise ebenfalls im Ventilblock 90 angeordnet sein. Des Weiteren ist denkbar, in den Ventilblock 90 zusätzlich das Spülventileinheit 82 anzuordnen.

Offenbart ist ein hydrostatischer Antrieb mit einer Druckmittelquelle zum Antreiben von vier Hydromotoren, von denen jeweils zwei in parallel zueinander angeordneten Reihen geschaltet sind. Im Druckmittelströmungspfad zwischen den Hydromotoren einer Reihe ist jeweils ein Druckmittelvolumenstrom abgegriffen, der über eine jeweilige Ventileinrichtung zu einer Druckmittelsenke zur Umgehung des jeweiligen stromabwärtigen Hydromotors einer Reihe abführbar ist. Zum Druckausgleich bei Druckunterschieden zwischen den Druckmittelströmungspfaden, insbesondere bei einer Lenkbewegung einer Knicklenkung, ist ein Steuerventil vorgesehen, über das die Druckmittelströmungspfade miteinander hydraulisch verbindbar sind.

## Patentansprüche

1. Hydrostatischer Fahrantrieb mit einer Hydropumpe (18) zum Antreiben von vier Hydromotoren (10, 12, 14, 16), von denen jeweils zwei in Reihe geschaltet sind, **dadurch gekennzeichnet, dass** die jeweiligen Druckmittelströmungspfade (61, 62) zwischen jeweils zwei in Reihe angeordneten Hydromotoren (10, 14; 12, 16) über ein Steuerventil (63) verbindbar sind.

2. Hydrostatischer Fahrantrieb nach Anspruch 1, wobei von einem jeweiligen Druckmittelströmungspfad (61, 62) zwischen jeweils zwei in Reihe angeordneten Hydromotoren (10, 14; 12, 16) ein Druckmittelvolumenstrom abgegriffen ist und über eine jeweilige Ventileinrichtung (56) zu einer Druckmittelsenke (T) zur Umgehung des jeweiligen stromabwärtigen Hydromotors (10, 12, 14, 16) einer Reihe abführbar ist.

3. Hydrostatischer Fahrantrieb nach Anspruch 1 oder 2, wobei einem jeweiligen Hydromotor (10, 12, 14, 16) ein Rad (2, 4, 6, 8) zugeordnet ist, und wobei das Steuerventil (63) in Abhängigkeit einer Lenkbewegung von zumindest zwei auf einer gemeinsamen Achse angeordneter Räder (2, 4; 6, 8) gesteuert ist.

4. Hydrostatischer Fahrantrieb nach Anspruch 3, wobei das Steuerventil (63) in Abhängigkeit einer Lenkbewegung einer Knicklenkung gesteuert ist.

5. Hydrostatischer Fahrantrieb nach einem der vorhergehenden Ansprüche, wobei das Steuerventil (63) ein Wegeventil ist, dessen Ventilschieber in Richtung seiner Schließstellung (0) von einer Federkraft einer Ventilfeder (134) und in Richtung seiner Öffnungsstellung (A) vom Lastdruck einer hydraulischen Lenkung (136) beaufschlagt oder in seine Öffnungsstellung (A) durch einen elektrischen Aktuator bringbar ist.

6. Hydrostatischer Fahrantrieb nach Anspruch 5, wobei das Steuerventil (63) ein Proportional-Wegeventil ist.

7. Hydrostatischer Fahrantrieb nach Anspruch 5 oder 6, wobei die Federkraft der Ventilfeder (134) einstellbar ist.

8. Hydrostatischer Fahrantrieb nach einem der Ansprüche 5 bis 7, wobei ein Wechselventil (138) vorgesehen ist, das eingangsseitig mit zwei Lenkzylindern der Knicklenkung zum Abgreifen des höchsten Lastdrucks verbindbar ist und an das ausgangsseitig eine mit dem Steuerventil (63) verbundene Steuerleitung (136) zum Beaufschlagen des Ventilschiebers mit dem höchsten Lastdruck in Richtung seiner Öffnungsstellung (A) angeschlossen ist.

9. Hydrostatischer Fahrantrieb nach einem der Ansprüche 5 bis 8, wobei eine Electronic Control Unit zum Auswerten einer erfassten Lenkbewegung und zum Ansteuern des Steuerventils (63) in Abhängigkeit der Lenkbewegung vorgesehen ist.

10. Fahrzeug mit einem hydrostatischen Fahrantrieb gemäß einem der Ansprüche 1 bis 9.
